# EUROPEAN PATENT SPECIFICATION

(11) **EP 4 579 526 B1**
(45) Date of publication and mention of the grant of the patent: **15.07.2026**
(21) Application number: 24219864.6
(22) Date of filing: 13.12.2024
(51) Int. Cl.: G06N 3/045, G06N 3/0495, G06N 3/063, G06N 3/082

(54) **ARTIFICIAL INTELLIGENCE NEURAL NETWORK ACCELERATOR AND METHOD FOR TRANSFORMER NEURAL NETWORK**
BESCHLEUNIGER EINES NEURONALEN NETZES MIT KÜNSTLICHER INTELLIGENZ UND VERFAHREN FÜR EIN NEURONALES TRANSFORMATORNETZWERK
ACCÉLÉRATEUR DE RÉSEAU NEURONAL À INTELLIGENCE ARTIFICIELLE ET PROCÉDÉ POUR RÉSEAU NEURONAL DE TRANSFORMATEUR

(30) Priority: 28.12.2023 KR 20230195690; 31.05.2024 KR 20240071933
(43) Date of publication of application: 02.07.2025
(73) Proprietor: Korea Advanced Institute of Science and Technology, Guseong-dong, Yuseong-gu Daejeon 34141 (KR)
(72) Inventor: YOO, Hoi Jun, 34141 Daejeon (KR); KIM, Sang Yeob, 34141 Daejeon (KR)
(74) Representative: AWA Sweden AB

(56) References cited:
- SEHOON KIM ET AL: "Big Little Transformer Decoder", ARXIV.ORG, CORNELL UNIVERSITY LIBRARY, 201 OLIN LIBRARY CORNELL UNIVERSITY ITHACA, NY 14853, 15 February 2023 (2023-02-15), XP091438816
- MAOR ASHKENAZI ET AL: "NeRN -- Learning Neural Representations for Neural Networks", ARXIV.ORG, CORNELL UNIVERSITY LIBRARY, 201 OLIN LIBRARY CORNELL UNIVERSITY ITHACA, NY 14853, 27 December 2022 (2022-12-27), XP091403822
- CHITTY-VENKATA KRISHNA TEJA ET AL: "A survey of techniques for optimizing transformer inference", JOURNAL OF SYSTEMS ARCHITECTURE, ELSEVIER BV, NL, vol. 144, 18 September 2023 (2023-09-18), XP087424782, ISSN: 1383-7621, [retrieved on 20230918], DOI: 10.1016/J.SYSARC.2023.102990

## Description

### BACKGROUND OF THE INVENTION

### Field of the Invention

The present invention relates to an artificial intelligence (AI) neural network accelerator and a method therefor, and more particularly to an AI neural network accelerator for a transformer neural network, which requires a lot of weights while reuse of the weights is difficult, thereby requiring frequent external memory access and consequently consuming a lot of power, and a method therefor.

### Description of the Related Art

A transformer neural network is a neural network that learns context and meaning by tracking a relationship in sequential data, such as words in a sentence, and is replacing a convolutional neural network (CNN) or a recurrent neural network (RNN).

Such a transformer neural network mathematically finds a pattern between elements, so that there is no need to construct a large labeled learning dataset, and has been widely used in image classification and large language models since the transformer neural network is suitable for parallel processing, and thus an execution speed is fast. Further, a mobile system providing real-time responses has been expected.

However, such a transformer neural network requires a lot of weights while reuse of the weights is difficult, thereby requiring frequent external memory access and consequently consuming a lot of power.

Therefore, to solve such a problem, various technologies (Y. Wang et al., "A 28nm 27.5TOPS/W Approximate-Computing-Based Transformer Processor with Asymptotic Sparsity Speculating and Out-of-Order Computing," 2022 IEEE International Solid- State Circuits Conference (ISSCC), San Francisco, CA, USA, 2022, pp. 1-3, F. Tu et al., "A 28nm 15.59µJ/Token Full-Digital Bitline-Transpose CIM-Based Sparse Transformer Accelerator with Pipeline/Parallel Reconfigurable Modes," 2022 IEEE International Solid- State Circuits Conference (ISSCC), San Francisco, CA, USA, 2022, pp. 466-468, and F. Tu et al., "16.1 MuITCIM: A 28nm 2.24µJ /Token Attention-Token-Bit Hybrid Sparse Digital CIM-Based Accelerator for Multimodal Transformers," 2023 IEEE International Solid- State Circuits Conference (ISSCC), San Francisco, CA, USA, 2023, pp. 248-250) have been proposed to increase hardware utilization and reduce power consumption. However, system power consumption and response time of these transformer processors are not yet suitable for a mobile device. For example, a large language model such as GPT-2 has a lot of weights (400 to 700 M), and external memory access consumes 68% of the total power.

In addition, to alleviate an external memory access bottleneck, a transformer accelerator applying pruning (S. Liu et al., "16.2 A 28nm 53.8TOPS/W 8b Sparse Transformer Accelerator with In-Memory Butterfly Zero Skipper for Unstructured-Pruned NN and CIM-Based Local-Attention-Reusable Engine," 2023 IEEE International Solid- State Circuits Conference (ISSCC), San Francisco, CA, USA, 2023, pp. 250-252) has been proposed. However, while this transformer accelerator may increase weight sparsity, the transformer accelerator may be applied only to a simple task such as predicting the next word (for example, language modeling), and cannot achieve high sparsity in advanced tasks such as language translation, question answering, and summarization.

Therefore, a novel approach is needed to be able to compress weights to reduce the amount of external memory access for highly energy-efficient mobile large language model acceleration.

Amongst the existing prior art solutions, SEHOON KIM ET AL: "Big Little Transformer Decoder", ARXIV.ORG, CORNELL UNIVERSITY LIBRARY, 201 OLIN LIBRARY CORNELL UNIVERSITY ITHACA, NY 14853, (2023-02-15), and MAOR ASHKENAZI ET AL: "NeRN - Learning Neural Representations for Neural Networks", ARXIV.ORG, CORNELL UNIVERSITY LIBRARY, 201 OLIN LIBRARY CORNELL UNIVERSITY ITHACA, NY 14853, (2022-12-27), may be mentioned.

### SUMMARY OF THE INVENTION

Therefore, the present invention has been made in view of the above problems, and provides an AI neural network accelerator and a method therefor that may reduce requirement of weights for accelerating an AI neural network to reduce the amount of external memory access and consequently reduce power consumption to accelerate a highly energy-efficient mobile large language model.

In addition, the present invention provides an AI neural network accelerator and a method therefor that may reduce requirement of weights for accelerating an AI neural network by primarily accelerating a reduced model in which basic requirement of weights required to accelerate a basic model is reduced by a predetermined ratio, and then further performing a secondary acceleration step to accelerate the basic model only in special cases where prediction accuracy of a result thereof is less than or equal to a preset threshold value.

In addition, the present invention provides an AI neural network accelerator and a method therefor that may reduce the amount of external memory access for receiving weights by including a weight embedding logic pre-generated as a result of learning weights of a transformer neural network matched with kernel location information of the transformer neural network, receiving only the kernel location information from an external memory to generate an implicit weight for accelerating an AI neural network, and then supplying the implicit weight using an on-chip network.

In addition, the present invention provides an AI neural network accelerator and a method therefor that may perform a process in which compressed kernel location information is received from an external memory and decompressed to reduce a time required to receive the kernel location information, thereby reducing an external memory access time.

The invention is defined in the independent claims. Preferred embodiments are defined by the dependent claims. Further aspects and examples are provided for facilitating the understanding of the invention.

In accordance with an aspect of the present invention, the above and other objects can be accomplished by the provision of an artificial intelligence (AI) neural network accelerator configured to accelerate a transformer neural network, the AI neural network accelerator including a calculator configured to predict output tokens in units of input tokens and including a plurality of transformer operation cores operating based on a transformer model using n weights (n being a natural number), and a controller configured to control an operation of each of the transformer operation cores after determining a size of the transformer model based on a number of weights, wherein the controller performs a control operation to perform primary prediction in which each of the plurality of transformer operation cores predicts output tokens using a reduced transformer model (referred to as hereinafter "reduced model") using m weights (m being a natural number satisfying m < n) in response to acquisition of the input tokens, and further perform secondary prediction of predicting output tokens for the input tokens using a transformer model before reduction (referred to as hereinafter "basic model") exclusively when prediction accuracy of a result of the primary prediction is less than or equal to a preset threshold value.

The AI neural network accelerator includes a weight generator including a weight embedding logic generated in advance as a result of training by matching weights of the transformer neural network with a x b kernel location information of the transformer neural network, and configured to generate an implicit weight based on location information of a kernel input from an external memory, wherein the controller provides the implicit weight through an on-chip network in response to a request from the plurality of transformer operation cores.

The weight generator includes a code decompression unit configured to decompress location information of a kernel input in a code-compressed state from the external memory, and an implicit weight generation unit including the weight embedding logic and configured to apply location information of a kernel decompressed by the code decompression unit to the weight embedding logic to generate an implicit weight corresponding to a location of the decompressed kernel.

The implicit weight generation unit may include a two-dimensional (2D) MAC array configured to perform multiplication and accumulation operations to generate the implicit weight using the decompressed location information of the kernel, and a weight embedding logic configured to select weight embedding corresponding to the location information of the kernel and transfer the weight embedding to the 2D MAC Array.

The weight generator includes a transformer weight memory configured to store the implicit weight, and an on-chip network switch configured to deliver the implicit weight through the on-chip network in response to a request from at least one of the plurality of transformer operation cores.

In accordance with another aspect of the present invention, there is provided a method of accelerating an AI neural network using an AI neural network accelerator including a plurality of transformer operation cores operating based on a transformer model using n weights (n being a natural number) and configured to accelerate a transformer neural network, the method including performing, by the AI neural network accelerator, primary prediction of predicting output tokens using a reduced transformer model (referred to as hereinafter "reduced model") using m weights (m being a natural number satisfying m < n) in response to acquisition of input tokens, calculating, by the AI neural network accelerator, prediction accuracy for a prediction result of the performing primary prediction, and further performing, by the AI neural network accelerator, secondary prediction of predicting output tokens for the input tokens using a transformer model before reduction (referred to as hereinafter "basic model") when the prediction accuracy is less than or equal to a preset threshold value.

The method includes including, by the AI neural network accelerator, a weight embedding logic generated in advance as a result of training by matching weights of an existing transformer neural network with a x b kernel location information of the transformer neural network, and generating an implicit weight based on location information of a kernel input from an external memory and the weight embedding logic, storing the implicit weight by the AI neural network accelerator, and transferring, by the AI neural network accelerator, the implicit weight through an on-chip network, wherein each of the performing primary prediction and the further performing secondary prediction includes predicting output tokens for the input tokens using the implicit weight.

The generating an implicit weight may include decompressing location information of a kernel input in a code-compressed state from the external memory, and the location information of the kernel decompressed in the decompressing may be applied to the weight embedding logic to generate an implicit weight corresponding to a decompressed location of the kernel.

### BRIEF DESCRIPTION OF THE DRAWINGS

The above and other objects, features and other advantages of the present invention will be more clearly understood from the following detailed description taken in conjunction with the accompanying drawings, in which:
FIGs. 1 and 2 are diagrams for describing a structure of an AI neural network accelerator according to an embodiment of the present invention;
FIG. 3 is a diagram for describing an acceleration process by a hybrid structure of the AI neural network accelerator according to an embodiment of the present invention;
FIG. 4 is a diagram for describing a process in which the AI neural network accelerator generates an implicit weight according to an embodiment of the present invention;
FIG. 5 is a diagram for describing a process of training a neural network to generate the implicit weight according to an embodiment of the present invention;
FIG. 6 is a diagram for describing compression and decompression for using the implicit weight according to an embodiment of the present invention;
FIGs. 7 and 8 are processing flowcharts for describing a method of accelerating an AI neural network according to an embodiment of the present invention; and
FIG. 9 is graphs for describing effects when the AI neural network accelerator according to the embodiment of the present invention and a method therefor are applied to various transformer models.

### DETAILED DESCRIPTION OF THE INVENTION

Hereinafter, embodiments of the present invention will be described with reference to the attached drawings, and will be described in detail so that those skilled in the technical field to which the present invention pertains may easily practice the present invention. However, the present invention may be implemented in various different forms and is not limited to the embodiments described herein. Meanwhile, to clearly describe the present invention in the drawings, parts not related to the description are omitted, and similar parts are given similar drawing reference numerals throughout the specification. In addition, descriptions of parts that may be easily understood by those skilled in the art even when a detailed description is omitted are omitted.

Throughout the specification and claims, when a part is described as including a certain component, this means that other components may be further included other than excluding other components, unless specifically stated otherwise.

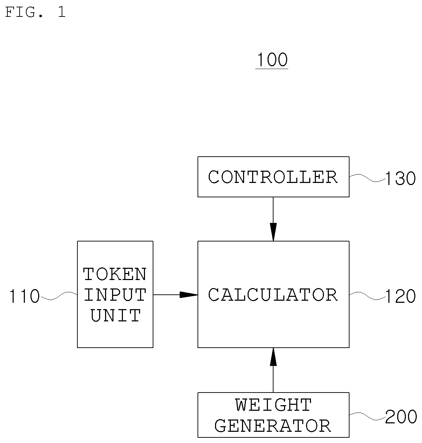

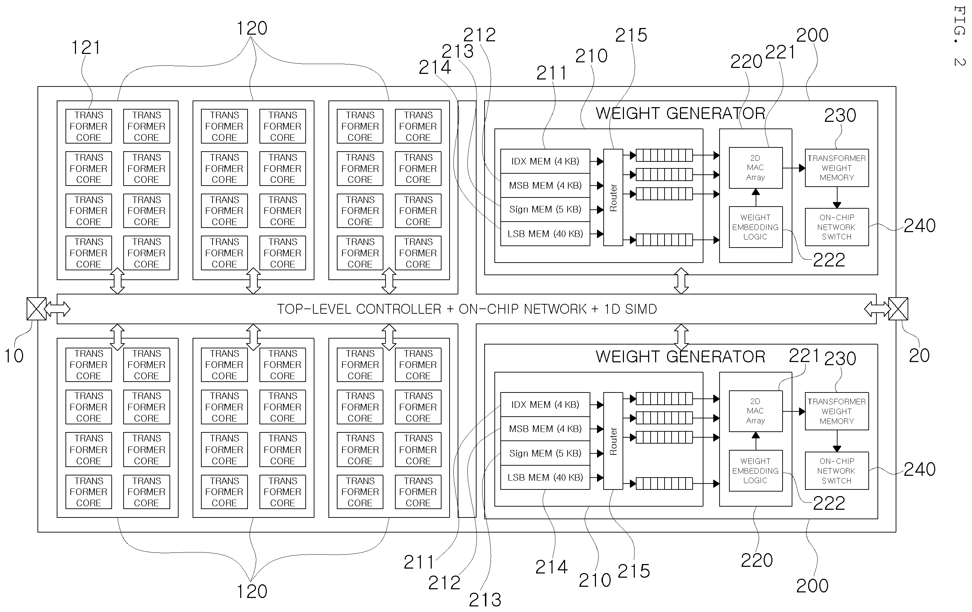

FIGs. 1 and 2 are diagrams for describing a structure of an AI neural network accelerator according to an embodiment of the present invention. FIG. 1 illustrates a schematic block of the AI neural network accelerator of the present invention, and FIG. 2 illustrates in more detail a calculator and a weight generator included in the AI neural network accelerator of the present invention.

Referring to FIGs. 1 and 2, the AI neural network accelerator 100 according to the embodiment of the present invention includes a plurality of gateways 10 and 20, a token input unit 110, a calculator 120, a controller 130, and a weight generator 200. In particular, the example of FIG. 2 illustrates the AI neural network accelerator 100 including 48 transformer operation cores 121, two weight generators 200, a top-level controller, an ID SIMD, and an on-chip network.

In this instance, each of the transformer operation cores 121 may include eight equivalent multipliers and accumulators (for 8-bit inputs and 8-bit weights), an input loader, a controller, an on-chip network switch, and input/weight/output memories to perform matrix multiplication required for each decoder block of the transformer and generate an output token each time.

The gateways 10 and 20 may connect an external memory (not illustrated) and the AI neural network accelerator 100. The gateways 10 and 20 may be used to transfer weights stored in the external memory (not illustrated) to the AI neural network accelerator 100, and to transfer processing results generated in the AI neural network accelerator 100 to the external memory (not illustrated).

The token input unit 110 receives input of a token. That is, the token input unit 110 receives input of one token each time from an input sentence including several tokens and transfers the token to the calculator 120.

The calculator 120 predicts output tokens in units of input tokens input through the token input unit 110. To this end, the calculator 120 may include a plurality of transformer operation cores 121, and each of the transformer operation cores 121 includes a transformer model.

In this instance, the transformer model has characteristics in that a size thereof is determined based on the number of required weights, and power consumption increases as the size of the transformer model increases. In other words, the transformer model has a characteristic that the size thereof increases as requirement of weights increases. Due to this characteristic, in the case of decreasing requirement of weights of any transformer model (hereinafter referred to as "basic model") using n (n being a natural number) weights, the size of the basic model may be reduced, and thus power consumption may be significantly reduced.

Therefore, the present invention uses these characteristics to predict a large number of tokens among the total input tokens using a transformer model (hereinafter referred to as "reduced model"), the size of which is reduced by reducing requirement of weights to m weights (m being a natural number satisfying m < n), thereby reducing requirement of weights for accelerating the AI neural network. In this way, external memory access is reduced, thereby reducing power consumption.

To this end, the calculator 120 is controlled by the controller 130 to be described later.

The controller 130 may control an operation of each of the transformer operation cores 121 after determining the size of the transformer model based on the number of weights. In particular, the controller 130 may control each of the transformer operation cores 121 so that each of the plurality of transformer operation cores 121 performs primary prediction on an input token by the reduced model, then calculates prediction accuracy for a result of the primary prediction, and additionally performs secondary prediction using the basic model only when the prediction accuracy is less than or equal to a preset threshold value (for example, prediction accuracy of 60%).

In this instance, the prediction accuracy may be calculated using various known technologies. For example, to calculate the prediction accuracy, the controller 130 may perform management to calculate a small model first and then execute a large model as needed.

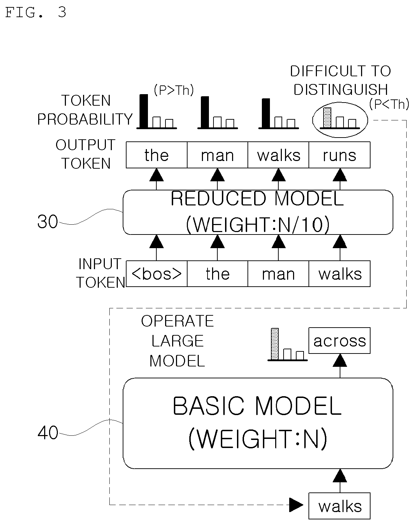

For example, the controller 130 causes each of the transformer operation cores 121 to primarily predict an output token using a reduced model that reduces requirement of weights of the basic model to n/10 weights (n being a natural number) in response to acquisition of the input token, and omit the secondary prediction process when the prediction accuracy exceeds the threshold value, thereby reducing requirement of weights. Such a process of the controller 130 is schematically displayed in FIG. **3****.**

FIG. 3 is a diagram for describing an acceleration process by a hybrid structure of the AI neural network accelerator according to an embodiment of the present invention, and schematically illustrates a process of primarily performing output token prediction using a reduced model having a small amount of requirement of weights for each of input tokens acquired by the controller 130, and additionally predicting an output token using a basic model having a large amount of requirement of weights for a predetermined number of input tokens having low prediction accuracy (that is, difficult to distinguish) as a result.

Referring to FIG. 3, for each of four input tokens (<bos>/the/man/walks), a token probability of each of output tokens (the/man/walks/runs) predicted using a reduced model (that is, transformer model having requirement of weights of "N/10") 30 is illustrated in the figure. Therefore, that is, since each of token probabilities (that is prediction accuracy) (P) of each of output tokens (the/man/walks) excluding the rightmost output token (runs) exceeds the threshold value (Th), an output token is additionally predicted using a basic model (that is, a transformer model having requirement of weights of "N") 40 for the rightmost output token (runs), and it can be seen that an output token (across) whose token probability (P) exceeds the threshold value (Th) is predicted as a result.

In this way, the present invention has a feature of significantly reducing requirement of weights compared to conventional technology of predicting output tokens for all input tokens by the basic model by predicting output tokens for all input tokens using a reduced model having a small amount of requirement of weights, and performing additional output token prediction using a basic model having a large amount of requirement of weights only for a small number of input tokens having low prediction accuracy.

In this way, when a method of the present invention, which primarily performs only small model calculation and skips large model calculation when a prediction probability of a specific token exceeds a predefined threshold, is applied to language modeling using GPT-2, there is an effect of reducing external memory access by 39%.

Referring again to FIGs. 1 and 2, the weight generator 200 generates a weight to be provided to each of the transformer operation cores 121.

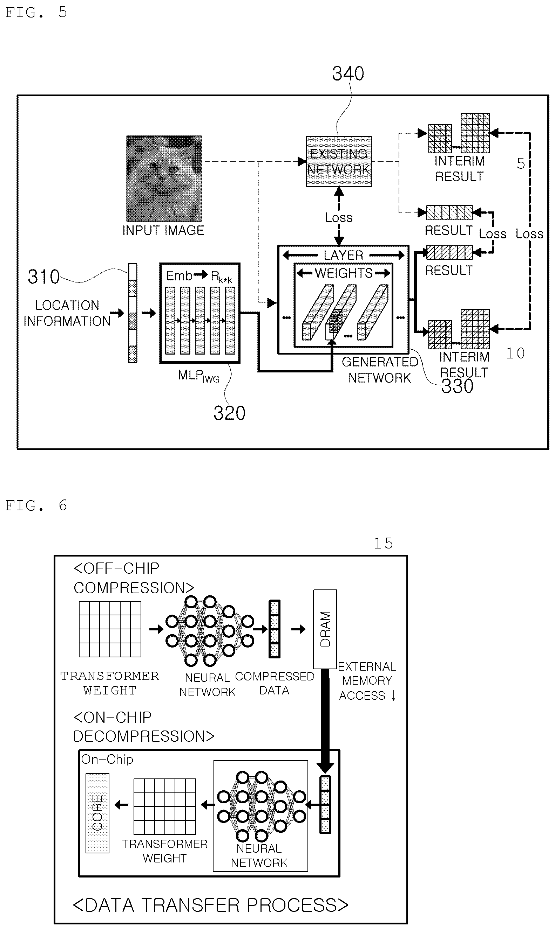

The weight generator 200 generates an implicit weight using an "AI neural network" trained to implicitly remember a weight of a transformer neural network, and may receive only a x b kernel location information of the transformer neural network as input and output an implicit weight corresponding to the corresponding location. In this instance, the "AI neural network" is a neural network different from the transformer neural network, and may be used by training a multilayer perceptron, which is commonly used to generate a weight for the transformer neural network. A process of training the AI neural network and moving data will be described later with reference to FIGs. 5 and 6.

To generate the implicit weight, the weight generator 200 may include a code decompression unit 210, an implicit weight generation unit 220, a transformer weight memory 230, and an on-chip network switch 240.

The code decompression unit 210 decompresses location information of a kernel input in a code-compressed state from an external memory. To this end, as a configuration for decompression of normal code-compressed data, the code decompression unit 210 includes an index memory (IDX_MEM) 211, an MSB memory (MSB_MEM) 212, a sign memory (Sign_MEM) 213, an LSB memory (LSB_MEM) 214, and a router 215.

The index memory (IDX_MEM) 211 stores an address of data whose MSB is not filled with consecutive sign bits, the MSB memory (MSB_MEM) 212 stores an MSB part value of data whose MSB side data is not filled with sign extension bits (that is, uncompressed data), the sign memory (Sign_MEM) 213 stores a sign bit compressed into 1 bit, the LSB memory 214 stores LSB data, and the router 215 decompresses compressed data using data information of each of the index memory (IDX_MEM) 211, the MSB memory (MSB_MEM) 212, the sign memory (Sign_MEM) 213, the LSB memory (LSB_MEM) 214 and transfers the decompressed data to an 8-bit queue.

The implicit weight generation unit 220 includes a two-dimensional (2D) MAC array 221 that performs multiplication and accumulation operations to generate an implicit weight using location information of a kernel decompressed by the code decompression unit 210, and a weight embedding logic 222 generated in advance as a result of training by matching weights of the transformer neural network with a x b kernel location information of the transformer neural network.

When location information of a kernel decompressed by the code decompression unit 210 is input, the implicit weight generation unit 220 may detect weight embedding corresponding to the location information from the weight embedding logic 222 and generate an implicit weight.

To this end, the weight embedding logic 222 selects weight embedding corresponding to the location information of the kernel decompressed by the code decompression unit 210 and transfers the weight embedding to the 2D MAC Array 221, thereby generating an implicit weight.

The transformer weight memory 230 stores the implicit weight generated by the implicit weight generation unit 220.

The on-chip network switch 240 transmits an implicit weight stored in the transformer weight memory 230 to the corresponding transformer computation core 121 through the on-chip network in response to a request from at least one of the plurality of transformer operation cores 121. To this end, the on-chip network switch 240 may be controlled by the controller 130. That is, the controller 130 may control an operation of the on-chip network switch 240 to provide the implicit weight through the on-chip network in response to a request from the plurality of transformer operation cores 121.

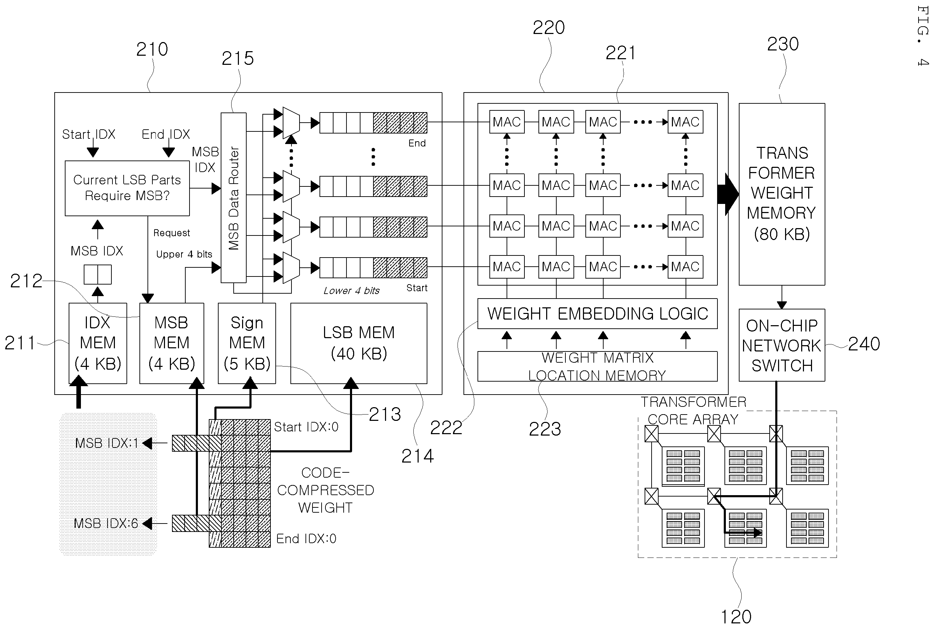

This process of the weight generator 200 is schematically illustrated in FIG. 4.

FIG. 4 is a diagram for describing a process in which the AI neural network accelerator generates an implicit weight according to an embodiment of the present invention. Referring to FIG. 4, when a code-compressed weight having a Start IDX of 0 and an End IDX of 7 is input to the code decompression unit 210 to generate eight weights at the frontmost side of the neural network, the code decompression unit 210 receives an address value from the IDX MEM 211 and verifies whether there is a weight whose MSB is filled with consecutive sign bits between weights 0 to 7. In the example of FIG. 4, since addresses of data whose MSBs are not filled with consecutive sign bits are number 1 and number 6, number 1 and number 6 are stored in the IDX MEM 211, and the code decompression unit 210 reads address values of number 1 and number 6. In this case, the code decompression unit 210 determines that MSBs of weights of numbers 0, 2, 3, 5, and 7 are all filled with sign extension bits, while weights of numbers 1 and 6 are not, thereby fetching a sign bit compressed to 1 bit from the Sign-MEM 213 to fill MSB-side data for the weights of numbers 0, 2, 3, 5, and 7, and fetching data from the MSB MEM 212 to fill MSB-side data for the weights of numbers 1 and 6. A reason therefor is to entirely supply MSB-side data to the implicit weight generation unit 220. In this instance, the MSB data router 215 performs a process of fetching two pieces of data necessary for numbers 1 and 6 from the MSB MEM 212. Meanwhile, whether to fetch data from the MSB MEM 212 and fill an MSB part or to fetch data from the LSB MEM 214 to fill an MSB changes depending on the situation for each weight, which is determined by multiplexer logic connected to a rear end of the MSB Data router 215.

Through this process, decompressed data (that is, location information of a decompressed kernel) is stored in an 8-bit queue and then transferred to the 2D MAC Array 221, and weight embedding corresponding to the location information is detected from the weight embedding logic 222 to generate an implicit weight.

The implicit weight generated in this way is used in a decoder block operation (not illustrated) that forms the transformer network, and may be specifically used in attention or feed-forward operation.

FIG. 5 is a diagram for describing a process of training the neural network to generate the implicit weight according to an embodiment of the present invention, and FIG. 6 is a diagram for describing compression and decompression for using the implicit weight according to an embodiment of the present invention.

First, referring to FIG. 5, to train the AI neural network, first, an embedding value 310 according to location information of specific a x b kernels among the weights of the transformer neural network is transferred to an AI neural network 320 including multilayer perceptron. Then, specific M x N kernels are generated through an operation of the AI neural network 320, and a new transformer neural network 330 may be generated by collecting all of these kernels. In this training process, the most important thing is how similar the generated new transformer neural network 330 is to an existing transformer neural network 340. Therefore, to this end, a difference (loss) between results generated by the new transformer neural network 330 and the existing transformer neural network 340 is calculated and substituted into a loss function. Thereafter, training is performed on the AI neural network 320 that generates a transformer network through backpropagation. Then, the AI neural network 320 generated through this training process may be used to reduce external memory access by being used as the weight embedding logic 222 of the implicit weight generation unit 220.

Referring to FIG. 6, as transfer of data for the use of an implicit weight, during compression outside a chip, M x N transformer neural network weights at specific locations are input to the AI neural network 320 to generate embedding, then only small-sized embedding is stored in a DRAM instead of the M x N transformer neural network weights, and the chip loads only the corresponding embedding, thereby reducing external memory access. During decompression inside the chip, embedding according to location information of a kernel to be processed is input to the AI neural network 320, and the AI neural network 320 generates implicit weights of the transformer neural networks through calculation. The implicit weights of the transformer neural networks generated at this time is used to perform language model operation.

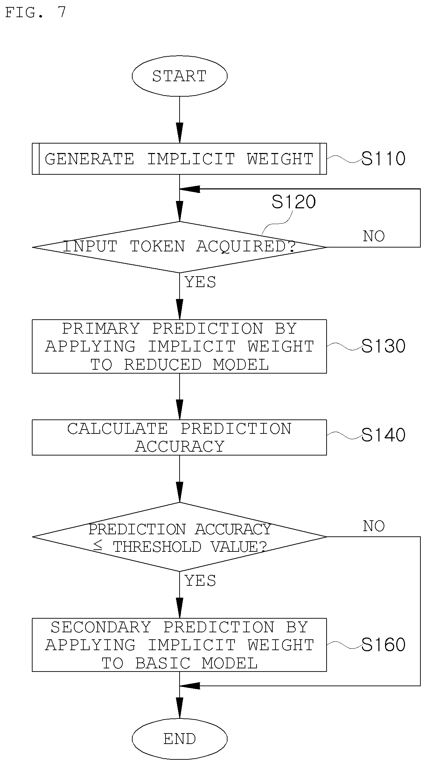

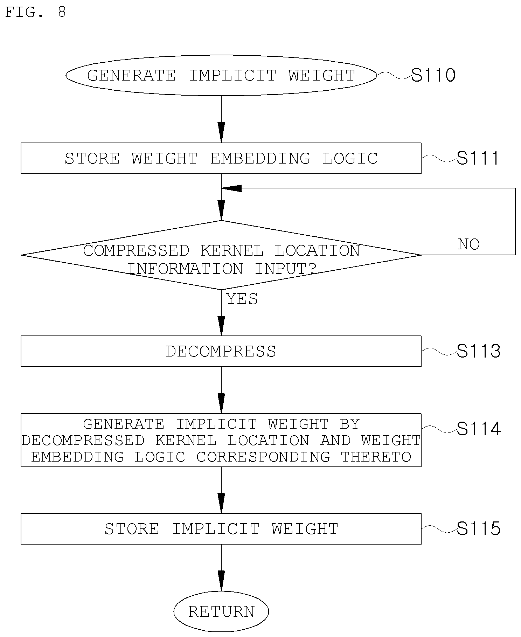

FIGs. 7 and 8 are processing flowcharts for describing a method of accelerating an AI neural network according to an embodiment of the present invention. Referring to FIGs. 1 to 8, the method of accelerating the AI neural network according to the embodiment of the present invention is described as follows.

First, in step S110, the AI neural network accelerator 100 of the present invention generates an implicit weight. That is, in step S110, the AI neural network accelerator 100 has a weight embedding logic generated in advance as a result of training by matching weights of the existing transformer neural network with a x b kernel location information of the transformer neural network, and generates an implicit weight based on the kernel location information input from an external memory and the weight embedding logic.

To this end, in step S111, the weight embedding logic is stored in the implicit weight generation unit 220, and in steps S112 and S113, the location information of the kernel input in a code-compressed state from the external memory is decompressed.

In step S114, the implicit weight generation unit 220 applies the location information of the kernel decompressed in step S113 to the weight embedding logic to generate an implicit weight corresponding to the location of the decompressed kernel. That is, in step S114, the implicit weight generation unit 220 generates an implicit weight by the decompressed kernel location and the weight embedding logic corresponding thereto.

In step S115, the transformer weight memory 230 stores the implicit weight.

In steps S120 and S130, the transformer operation core 121 performs primary prediction to predict output tokens using a reduced transformer model (hereinafter referred to as a "reduced model") that uses m weights (m being a natural number satisfying m < n) in response to acquisition of input tokens. To this end, in step S130, the transformer operation core 121 is controlled by the controller 130.

In step S140, the controller 130 calculates prediction accuracy for a primary prediction result of step S130.

In addition, in steps S150 and S160, the controller 130 compares the prediction accuracy with a preset threshold value, and when the prediction accuracy is less than or equal to the preset threshold value, the controller 130 controls the transformer operation core 121 so that secondary prediction is further performed to predict an output token for the input token using the transformer model before being reduced (referred to as hereinafter "basic model"). That is, in step S160, the transformer operation core 121 performs the secondary prediction under the control of the controller 130.

To this end, in steps S130 and S160, the transformer operation core 121 may further include an implicit weight transfer step in which the transformer weight memory 230 requests an implicit weight, and in response, the on-chip network switch 240 transfers the implicit weight through the on-chip network.

Further, in steps S130 and S160, the transformer operation core 121 predicts an output token for the input token using the implicit weight.

In this way, the present invention has an effect of reducing external memory access by performing some operations inside the accelerator instead of fetching all weights for acceleration of the transformer neural network from the outside. In other words, the present invention may increase energy efficiency while maintaining accuracy of transformer inference through large and small AI neural network hybrid structures and implicit weight generation.

As an example, in the case of language modeling using GPT-2, external memory access may be reduced by 39% using a method of the present invention, which performs only small model calculation first and skips large model calculation when a prediction probability of a specific token exceeds a predefined threshold value. In addition, external memory access may be reduced by 60% by generating implicit weights using only locations of kernels as input, and external memory access may be reduced up to 74% by applying code compression technology to compress the AI network for implicit weight generation.

As another example, in the case of language translation using mT5, external memory access may be reduced by 42% using mixed large and small network structures, external memory access may be reduced by 67% through implicit weight generation, and external memory access may be reduced by 78% using code compression technology.

In addition, in the case of summarization using T5, external memory access may be reduced by 59% using mixed large and small network structures, external memory access may be reduced by 71% through implicit weight generation, and external memory access may be reduced by 78% using code compression technology.

Finally, in the case of language translation using FSMT, external memory access may be reduced by 48% using mixed large and small network structures, external memory access may be reduced by 72% through implicit weight generation, and external memory access may be reduced by 81% using code compression technology.

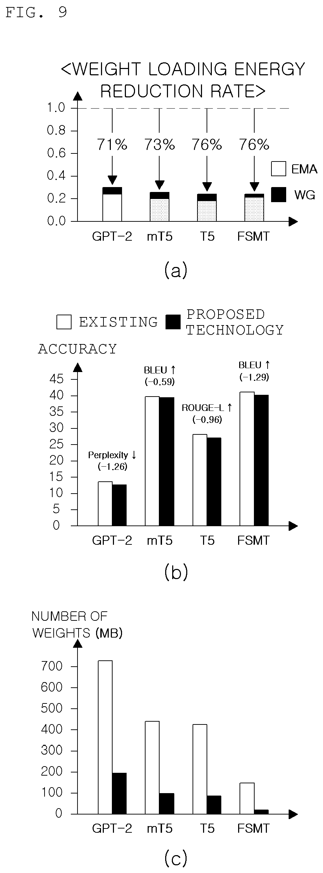

The effects of the present invention are schematically illustrated in FIG. 9.

FIG. 9 is graphs for describing effects when the AI neural network accelerator according to the embodiment of the present invention and a method therefor are applied to various transformer models (for example, GPT-2, mT5, T5, and FSMT). FIG. 9A illustrates the amount of reduction of weight loading energy for each of the models when the present invention is applied, FIG. 9B illustrates a difference in accuracy compared to conventional technology when the present invention is applied to each of the models, and FIG. 9C illustrates a difference in the number of weights compared to conventional technology when the present invention is applied to each of the models.

Referring to FIG. 9A, it can be seen that weight loading energy was reduced by 71% when the present invention was applied to GPT-2, weight loading energy was reduced by 73% when the present invention was applied to mT5, weight loading energy was reduced by 76% when the present invention was applied to T5, and weight loading energy was reduced by 76% when the present invention was applied to FSMT.

In addition, referring to FIG. 9B, it can be seen that accuracy decreased by 1.26 when the present invention was applied to GPT-2, accuracy decreased by 0.59 when the present invention was applied to mT5, accuracy decreased by 0.96 when the present invention was applied to T5, and accuracy decreased by 1.29 when the present invention was applied to FSMT.

Meanwhile, referring to FIG. 9C, it can be seen that the number of weights was significantly reduced when the present invention was applied to GPT-2, mT5, T5, and FSMT.

As described above, the present invention shows accuracy of -0.52 to -1.29, a weight compression ratio of 74 to 81%, and a weight loading energy reduction rate of 71 to 76% compared to conventional technology.

As described above, an AI neural network accelerator and a method therefor of the present invention has a characteristic of being able to reduce requirement of weights for accelerating an AI neural network to reduce the amount of external memory access and consequently reduce power consumption to accelerate a highly energy-efficient mobile large language model.

In addition, the present invention has a characteristic of being able to reduce requirement of weights for accelerating an AI neural network by primarily accelerating a reduced model in which basic requirement of weights required to accelerate a basic model is reduced by a predetermined ratio, and then further performing a secondary acceleration step to accelerate the basic model only in special cases where prediction accuracy of a result thereof is less than or equal to a preset threshold value.

In addition, the present invention has a characteristic of being able to reduce the amount of external memory access for receiving weights by including a weight embedding logic pre-generated as a result of learning weights of a transformer neural network matched with kernel location information of the transformer neural network, receiving only the kernel location information from an external memory to generate an implicit weight for accelerating an AI neural network, and then supplying the implicit weight using an on-chip network.

An AI neural network accelerator and a method therefor of the present invention described above have an effect of being able to reduce requirement of weights for accelerating an AI neural network to reduce the amount of external memory access and consequently reduce power consumption to accelerate a highly energy-efficient mobile large language model.

In addition, the present invention has an effect of being able to reduce requirement of weights for accelerating an AI neural network by primarily accelerating a reduced model in which basic requirement of weights required to accelerate a basic model is reduced by a predetermined ratio, and then further performing a secondary acceleration step to accelerate the basic model only in special cases where prediction accuracy of a result thereof is less than or equal to a preset threshold value.

In addition, the present invention has an effect of being able to reduce the amount of external memory access for receiving weights by including a weight embedding logic pre-generated as a result of learning weights of a transformer neural network matched with kernel location information of the transformer neural network, receiving only the kernel location information from an external memory to generate an implicit weight for accelerating an AI neural network, and then supplying the implicit weight using an on-chip network.

## Claims

1. An artificial intelligence (AI) neural network accelerator (100) configured to accelerate a transformer neural network, the AI neural network accelerator comprising:
a calculator (120) configured to predict output tokens in units of input tokens and including a plurality of transformer operation cores (121) operating based on a transformer model using n weights, n being a natural number ;
a controller (130) configured to control an operation of each of the transformer operation cores (121) after determining a size of the transformer model based on a number of weights,
wherein the controller (130) performs a control operation to perform primary prediction in which each of the plurality of transformer operation cores (121) predicts output tokens using a reduced transformer model using m weights, m being a natural number satisfying m < n in response to acquisition of the input tokens, and further perform secondary prediction of predicting output tokens for the input tokens using a transformer model before reduction exclusively when prediction accuracy of a result of the primary prediction is less than or equal to a preset threshold value; and **characterized in that** the AI neural network accelerator further comprises:
a weight generator (200) including a weight embedding logic (222) generated in advance as a result of training by matching weights of the transformer neural network with a x b kernel location information of the transformer neural network, and configured to generate an implicit weight based on location information of a kernel input from an external memory,
wherein the controller (130) provides the implicit weight through an on-chip network in response to a request from the plurality of transformer operation cores (121),
wherein the weight generator (200) further comprises:
a code decompression unit (210) configured to decompress location information of a kernel input in a code-compressed state from the external memory; and
an implicit weight generation unit (220) including the weight embedding logic (222) and configured to apply location information of a kernel decompressed by the code decompression unit (210) to the weight embedding logic (222) to generate an implicit weight corresponding to a location of the decompressed kernel,
a transformer weight memory (230) configured to store the implicit weight; and
an on-chip network switch (240) configured to deliver the implicit weight through the on-chip network in response to a request from at least one of the plurality of transformer operation cores (121).

2. The AI neural network accelerator according to claim 1, wherein the implicit weight generation unit comprises:
a two-dimensional (2D) MAC array configured to perform multiplication and accumulation operations to generate the implicit weight using the decompressed location information of the kernel; and
a weight embedding logic configured to select weight embedding corresponding to the location information of the kernel and transfer the weight embedding to the 2D MAC Array.

3. A method of accelerating an AI neural network using an AI neural network accelerator including a plurality of transformer operation cores operating based on a transformer model using n weights, n being a natural number and configured to accelerate a transformer neural network, the method comprising:
performing, by the AI neural network accelerator, primary prediction of predicting output tokens using a reduced transformer model using m weights, m being a natural number satisfying m < n in response to acquisition of input tokens;
calculating, by the AI neural network accelerator, prediction accuracy for a prediction result of the performing primary prediction; and
further performing, by the AI neural network accelerator, secondary prediction of predicting output tokens for the input tokens using a transformer model before reduction when the prediction accuracy is less than or equal to a preset threshold value,
**characterized in that**
the method further comprising:
including, by the AI neural network accelerator, a weight embedding logic generated in advance as a result of training by matching weights of an existing transformer neural network with a x b kernel location information of the transformer neural network, and generating an implicit weight based on location information of a kernel input from an external memory and the weight embedding logic;
storing the implicit weight by the AI neural network accelerator; and
transferring, by the AI neural network accelerator, the implicit weight through an on-chip network,
wherein each of the performing primary prediction and the further performing secondary prediction comprises predicting output tokens for the input tokens using the implicit weight.

4. The method according to claim 3, wherein:
the generating an implicit weight comprises decompressing location information of a kernel input in a code-compressed state from the external memory, and
the location information of the kernel decompressed in the decompressing is applied to the weight embedding logic to generate an implicit weight corresponding to a decompressed location of the kernel.

## Patentansprüche

1. Ein neuronaler Netzwerkbeschleuniger (100) für künstliche Intelligenz (KI), der zur Beschleunigung eines Transformer-Neuralnetzwerks konfiguriert ist, wobei der neuronale Netzwerkbeschleuniger für künstliche Intelligenz umfasst:
einen Rechner (120), der so konfiguriert ist, dass er Ausgabetoken in Einheiten von Eingabetoken vorhersagt, und der eine Vielzahl von Transformer-Rechenkernen (121) umfasst, die auf der Grundlage eines Transformer-Modells unter Verwendung von n Gewichten, wobei n eine natürliche Zahl ist;
einen Controller (130), der so konfiguriert ist, dass er den Betrieb jedes der Transformer-Rechenkern (121) steuert, nachdem er eine Größe des Transformer-Modells auf der Grundlage einer Anzahl von Gewichten bestimmt hat,
wobei der Controller (130) einen Steuerungsvorgang durchführt, um eine Primärvorhersage durchzuführen, bei der jeder der mehreren Transformer-Rechenkern (121) Ausgabetoken unter Verwendung eines reduzierten Transformer-Modells vorhersagt unter Verwendung von m Gewichten, wobei m eine natürliche Zahl ist, die m < n erfüllt, als Reaktion auf die Erfassung der Eingabetoken, und ferner eine sekundäre Vorhersage durchführt, bei der Ausgabetoken für die Eingabetoken unter Verwendung eines Transformator-Modells vor der Reduktion vorhergesagt werden, ausschließlich dann, wenn die Vorhersagegenauigkeit eines Ergebnisses der primären Vorhersage kleiner oder gleich einem voreingestellten Schwellenwert ist; und **dadurch gekennzeichnet, dass** der KI-Neuralnetzwerk-Beschleuniger ferner umfasst:
einen Gewichtsgenerator (200) mit einer Gewichtseinbettungslogik (222), die im Voraus als Ergebnis eines Trainings durch Abgleichen von Gewichten des Transformer-Neuralnetzwerks mit einer a x b-Kernel-Positionsinformation des Transformer-Neuralnetzwerks generiert wurde und so konfiguriert ist, dass sie ein implizites Gewicht auf der Grundlage von Positionsinformationen eines Kernel- Eingangs aus einem externen Speicher generiert,
wobei der Controller (130) das implizite Gewicht über ein On-Chip-Netzwerk als Reaktion auf eine Anforderung von der Vielzahl von Transformer-Rechenkernen (121) bereitstellt, wobei der Gewichtsgenerator (200) ferner umfasst: eine Code-Dekomprimierungseinheit (210), die so konfiguriert ist, dass sie Positionsinformationen eines Kernel-Eingangs in einem codekomprimierten Zustand aus dem externen Speicher dekomprimiert; und eine Einheit zur Erzeugung impliziter Gewichte (220), die die Gewichteinbettungslogik (222) enthält und so konfiguriert ist, dass sie Positionsinformationen eines durch die Code-Dekomprimierungseinheit (210) dekomprimierten Kernels auf die Gewichteinbettungslogik (222) anwendet, um ein implizites Gewicht zu erzeugen, das einer Position des dekomprimierten Kernels entspricht, einen Transformator-Gewichtsspeicher (230), der so konfiguriert ist, dass er das implizite Gewicht speichert; und
eine Einheit zur Erzeugung impliziter Gewichte (220), die die Gewichteinbettungslogik (222) enthält und so konfiguriert ist, dass sie Positionsinformationen eines durch die Code-Dekomprimierungseinheit (210) dekomprimierten Kernels auf die Gewichteinbettungslogik (222) anwendet, um ein implizites Gewicht zu erzeugen, das einer Position des dekomprimierten Kernels entspricht, einen Transformator-Gewichtsspeicher (230), der so konfiguriert ist, dass er das implizite Gewicht speichert; und
einen On-Chip-Netzwerk-Switch (240), der so konfiguriert ist, dass er das implizite Gewicht als Reaktion auf eine Anforderung von mindestens einem der mehreren Transformer-Betriebskerne (121) über das On-Chip-Netzwerk bereitstellt

2. Kl-Neuralnetzwerk-Beschleuniger nach Anspruch 1, wobei die Einheit zur Erzeugung impliziter Gewichte umfasst:
ein zweidimensionales (2D) MAC-Array, das so konfiguriert ist, dass es Multiplikations- und Akkumulationsoperationen durchführt, um das implizite Gewicht unter Verwendung der dekomprimierten Positionsinformationen des Kernels zu erzeugen; und
eine Gewichteinbettungslogik, die so konfiguriert ist, dass sie eine den Positionsinformationen des Kernels entsprechende Gewichteinbettung auswählt und die Gewichteinbettung an das 2D-MAC-Array überträgt.

3. Verfahren zum Beschleunigen eines Kl-Neuralnetzwerks unter Verwendung eines KI-Neuralnetzwerk-Beschleunigers, der eine Vielzahl von Transformer-Operationskernen umfasst, die auf der Grundlage eines Transformer-Modells unter Verwendung von n Gewichten, wobei n eine natürliche Zahl ist, und so konfiguriert ist, dass es ein Transformer-Neuralnetzwerk beschleunigt, wobei das Verfahren umfasst:
Durchführung einer Primärvorhersage durch den KI-Neuralnetzwerk-Beschleuniger zur Vorhersage von Ausgabetoken unter Verwendung einer verkleinertes Transformator-Modell unter Verwendung von m Gewichten, wobei m eine natürliche Zahl ist die die Bedingung m < n erfüllt
als Reaktion auf die Erfassung von Eingabetoken;
Berechnen der Vorhersagegenauigkeit für ein Vorhersageergebnis der durchgeführten primären Vorhersage durch den KI-Neuralnetzwerk-Beschleuniger; und
weiterhin Durchführen einer sekundären Vorhersage durch den KI- Neuralnetzwerk-Beschleuniger zur Vorhersage von
Token für die Eingabetoken unter Verwendung eines Transformer-Modells vor der Reduktion wenn die Vorhersagegenauigkeit kleiner oder gleich einem voreingestellten Schwellenwert ist, **dadurch gekennzeichnet, dass** das Verfahren ferner umfasst:
Einbeziehen einer vorab erzeugten Gewichte-Einbettungslogik durch den KI-Neuralnetzwerk-Beschleuniger, die als Ergebnis eines Trainings durch Abgleichen von Gewichten eines bestehenden Transformer-Neuralnetzwerks mit einer a x b-Kernel-Positionsinformation des Transformer-Neuralnetzwerks erzeugt wurde, und Erzeugen eines impliziten Gewichts auf der Grundlage von Positionsinformationen eines Kernel-Eingangs aus einem externen Speicher und der Gewichte-Einbettungslogik;
Speichern des impliziten Gewichts durch den KI-Neuralnetzwerk-Beschleuniger; und
bertragen des impliziten Gewichts durch den KI-Neuralnetzwerk-Beschleuniger über ein On-Chip-Netzwerk,
wobei sowohl die durchgeführte primäre Vorhersage als auch die zusätzlich durchgeführte sekundäre Vorhersage das Vorhersagen von Ausgabetoken für die Eingabetoken unter Verwendung des impliziten Gewichts umfasst.

4. Verfahren nach Anspruch 3, wobei: das Erzeugen eines impliziten Gewichts das Dekomprimieren von Positionsinformationen eines in einem codekomprimierten Zustand vorliegenden Kernel-Eingangs aus dem externen Speicher umfasst, und die bei der Dekomprimierung dekomprimierten Positionsinformationen des Kernels auf die Gewichteinbettungslogik angewendet werden, um ein implizites Gewicht zu erzeugen, das einer dekomprimierten Position des Kernels entspricht.

## Revendications

1. Un accélérateur de réseau neuronal d'intelligence artificielle (IA) (100) configuré pour accélérer un réseau neuronal de type Transformer, l'accélérateur de réseau neuronal d'IA comprenant : un calculateur (120) configuré pour prédire des tokens de sortie par unités de tokens d'entrée et comprenant une pluralité de cœurs opérationnels de transformateur (121) fonctionnant sur la base d'un modèle de transformateur utilisant n poids, n étant un nombre naturel;
un contrôleur (130) configuré pour contrôler le fonctionnement de chacun des cœurs opérationnels de transformateur (121) après avoir déterminé une taille du modèle de transformateur sur la base d'un nombre de poids,
dans lequel le contrôleur (130) effectue une opération de contrôle pour réaliser une prédiction primaire dans laquelle chacun des nombreux cœurs de traitement de transformateur (121) prédit des jetons de sortie à l'aide d'un modèle de transformateur réduit utilisant m poids, m ètant un nombre naturel satisfaisant m < n, en réponse à l'acquisition des jetons d'entrée, et effectue en outre une prédiction secondaire consistant à prédire des jetons de sortie pour les jetons d'entrée à l'aide d'un modèle de transformateur avant reduction exclusivement lorsque la précision de prédiction d'un résultat de la prédiction primaire est inférieure ou égale à une valeur seuil prédéfinie ; et **caractérisé en ce que** l'accélérateur de réseau neuronal IA comprend en outre :
un générateur de poids (200) comprenant une logique d'intégration de poids (222) générée à l'avance à la suite d'un apprentissage par mise en correspondance des poids du réseau neuronal de type transformateur avec des informations de localisation de noyau de dimension a x b du réseau neuronal de type transformateur, et configuré pour générer un poids implicite sur la base d'informations de localisation d'une entrée de noyau provenant d'une mémoire externe, dans lequel le contrôleur (130) fournit le poids implicite via un réseau intégré en réponse à une requête provenant de la pluralité de cœurs de traitement de transformateur (121), dans lequel le générateur de poids (200) comprend en outre : une unité de décompression de code (210) configurée pour décompresser des informations de localisation d'une entrée de noyau dans un état compressé par code à partir de la mémoire externe ; et
une unité de génération de poids implicite (220) comprenant la logique d'intégration de poids (222) et configurée pour appliquer les informations de localisation d'un noyau décompressé par l'unité de décompression de code (210) à la logique d'intégration de poids (222) afin de générer un poids implicite correspondant à une localisation du noyau décompressé, une mémoire de poids de transformateur (230) configurée pour stocker le poids implicite ; et
un commutateur de réseau intégré (240) configuré pour fournir le poids implicite via le réseau intégré en réponse à une requête provenant d'au moins un des nombreux cœurs de traitement de transformateur (121).

2. Accélérateur de réseau neuronal IA selon la revendication 1, dans lequel l'unité de génération de poids implicites comprend :
un réseau MAC bidimensionnel (2D) configuré pour effectuer des opérations de multiplication et d'accumulation afin de générer le poids implicite à l'aide des informations de localisation décompressées du noyau ; et
une logique d'intégration de poids configurée pour sélectionner une intégration de poids correspondant aux informations d'emplacement du noyau et transférer l'intégration de poids vers le réseau MAC 2D.

3. Procédé d'accélération d'un réseau neuronal d'IA à l'aide d'un accélérateur de réseau neuronal d'IA comprenant une pluralité de cœurs d'opération de transformateur fonctionnant sur la base d'un modèle de transformateur utilisant n poids, n étant un nombre naturel, et configuré pour accélérer un réseau neuronal de type Transformer, le procédé comprenant :
l'exécution, par l'accélérateur de réseau neuronal d'IA, d'une prédiction primaire consistant à prédire des tokens de sortie à l'aide d'un modèle de transformateur réduit en utilisant m poids, m étant un nombre naturel satisfaisant m < n en réponse à l'acquisition de jetons d'entrée ;
calculer, par l'accélérateur de réseau neuronal d'IA, la précision de prédiction pour un résultat de prédiction de la prédiction primaire effectuée ; et
effectuer en outre, par l'accélérateur de réseau neuronal IA, une prédiction secondaire consistant à prédire des jetons de sortie
pour les jetons d'entrée à l'aide d'un modèle de transformateur avant reduction lorsque la précision de prédiction est inférieure ou égale à une valeur seuil prédéfinie, **caractérisé en ce que**
la méthode comprenant en outre :
l'intégration, par l'accélérateur de réseau neuronal IA, d'une logique d'intégration de poids générée à l'avance à la suite d'un apprentissage par correspondance des poids d'un réseau neuronal transformateur existant avec des informations de localisation de noyau a x b du réseau neuronal transformateur, et la génération d'un poids implicite sur la base des informations de localisation d'une entrée de noyau provenant d'une mémoire externe et de la logique d'intégration de poids ;
le stockage du poids implicite par l'accélérateur de réseau neuronal IA ; et le transfert, par l'accélérateur de réseau neuronal IA, du poids implicite via un réseau sur puce, dans lequel chacune des prédictions primaires et secondaires effectuées comprend la prédiction de tokens de sortie pour les tokens d'entrée à l'aide du poids implicite.

4. Procédé selon la revendication 3, dans lequel : la génération d'un poids implicite comprend la décompression d'informations de localisation d'une entrée de noyau dans un état compressé par code à partir de la mémoire externe, et les informations de localisation du noyau décompressées lors de la décompression sont appliquées à la logique d'intégration de poids afin de générer un poids implicite correspondant à une localisation décompressée du noyau.
